# EUROPÄISCHE PATENTSCHRIFT

(11) **EP 3 263 953 B1**
(45) Veröffentlichungstag und Bekanntmachung des Hinweises auf die Patenterteilung: **06.11.2019**
(21) Anmeldenummer: 16001438.7
(22) Anmeldetag: 28.06.2016
(51) Int. Cl.: F16H 61/4026, F16H 61/4139, F16H 61/433, F16H 61/431

(54) **HYDROSTATISCHER ANTRIEB MIT GESCHLOSSENEM KREISLAUF UND VERFAHREN ZUM BETRIEB DES ANTRIEBS**
HYDROSTATIC DRIVE WITH CLOSED CIRCUIT AND METHOD FOR OPERATING THE DRIVE
ENTRAINEMENT HYDROSTATIQUE COMPRENANT UN CIRCUIT FERME ET PROCEDE DE FONCTIONNEMENT DE L'ENTRAINEMENT

(43) Veröffentlichungstag der Anmeldung: 03.01.2018
(73) Patentinhaber: Thomas Magnete GmbH, 57562 Herdorf (DE); HP Hydraulik S.p.A., 40066 Pieve di Cento (IT)
(72) Erfinder: Gambetti, Andrea, 41051 Castelnuovo, Rangone (Mo) (IT); Maxeiner, Thassilo, 97737 Gemünden (DE)

(56) Entgegenhaltungen:
- EP-A1- 2 503 195
- EP-B2- 1 527 939
- DE-A1- 4 140 860
- DE-A1-102012 005 824
- DE-T5-112012 005 015

## Beschreibung

Die Erfindung betrifft einen hydrostatischen Antrieb mit geschlossenem Kreislauf entsprechend dem Oberbegriff des ersten Patentanspruchs. Solche Antriebe enthalten vorzugsweise Axialkolbenpumpen mit elektrohydraulischer schaltend oder proportional wirkender Verstellung, aber auch auf Pumpen mit hydraulischer Fernverstellung und Pumpen mit elektronisch automotiver Ansteuerung. In vielen Anwendungen werden nicht nur die Pumpe, sondern auch der hydrostatische Motor verstellt.

### Stand der Technik:

Bei Antrieben mit geschlossenem Kreislauf ist eine Flüssigkeitseinspeisung mittels einer Speisepumpe erforderlich. Dabei wird der Speisedruck üblicherweise fest eingestellt auf einen Druck, der auch gleichzeitig die Entnahme der Stellenergie für die Pumpenverstellung gewährleistet; in der Regel ist somit ein Versorgungsdruck von 20-30 bar für die Pumpenverstellung vorgegeben. Mit diesem Versorgungsdruck kann die Pumpenverstellung sicher betätigt werden. Aber damit muß auch der Speisedruck für den geschlossenen Kreislauf konstant auf diesem Druckniveau gehalten werden; die erforderliche Antriebsleistung für die Speisepumpe ist definiert durch das Produkt von Fördermenge mal Speisedruck, welcher aber niedriger sein könnte, wenn der Steuerdruck nicht aus dem Speisekreis entnommen würde.

Bekannt ist aus der Druckschrift DE 10 2012 005 824A1 eine schaltbare Reduzierung des Speisedrucks, verbunden mit der gleichzeitigen Reduzierung des aus dem Speisedruck entnommenen Steuerölversorung, was die mögliche Pumpenausschwenkung gegen die zentrierend wirkende Feder reduziert.

Auch die Druckschrift DE 11 2012 005 015 T5 zeigt ein hydrostatisches Getriebe mit einer gesteuerten bedarfsabhängigen Steuerung des Speisedrucks.

In der Druckschrift zur Erfindung einer Speisedruckabsenkung nach EP 2 503 195 A1 ist im Abschnitt 0007 die mechanische Entkoppelung der Speisepumpe von der Hydraulikpumpe dargestellt, welche die vorliegende Erfindung nicht benötigt. Die dort in den Abschnitten 0009 und 0050 bis 0052 dargestellte proportionale Druckregelung des Speisedrucks dient zur Mengenregelung der Ausspeisemenge in Abhängigkeit des Kühlbedarfs im geschlossenen Kreislauf. In dieser Erfindung ist gem. Fig.8 eine Kopplung des Versorgungsdrucks an den Speisedruck ohne die Möglichkeit der Speicherung der Stellenergie in einem Hydrospeicher oder Erzeugung der Stellenergie mittels einer Elektropumpe vorgesehen.

Die Erfindung nach der Druckschrift EP 1 527 939 B2 besitzt einen Hydrospeicher (51) im Steuerölkreis, welcher durch ein Speicherladeventil (52) aufgeladen wird, das aus dem Speisepumpenkreis gespeist wird und Stellenergie für die Aufsteuerung der hydraulisch lüftenden Feststellbremsen an den Verstellmotoren zur Verfügung stellt. Die Erfindung dient jedoch nicht der Absenkung des Speisedrucks bei gleichzeitiger Aufrechterhaltung der Steuerölversorgung der Pumpenverstellung.

### Aufgabe:

Mit der vorliegenden Erfindung soll ein Antrieb beschrieben werden, der eine Absenkung des von der Speisepumpe bereigestellten Speisedrucks ermöglicht, und gleichzeitig eine hinsichtlich des Drucks und der Fördermenge bedarfsgerechte Versorgung der Verstelleinheit des Antriebs bewirkt.

### Lösung:

Die Aufgabe wird durch die charakteristischen Merkmale des Hauptanspruchs gelöst, weitere Ansprüche führen die Erfindung näher aus und beschreiben Verfahren zum Betrieb des Antriebs.

Die Reduzierung des Speisedrucks wird in bekannter Weise mittels des verstellbaren Speisedruckbegrenzungsventils bewirkt.

Damit der Druck der Versorgung der Verstelleinheit des Antriebs nicht ebenfalls reduziert wird, enthält die Versorgungseinheit einen Hydrospeicher, der durch ein Rückschlagventil von der Speisepumpe getrennt ist, wenn der Druck im Hydrospeicher höher ist als an der Speisepumpe.

Damit der Druck und die Fördermenge bedarfsgerecht bereitgestellt wird, ermittelt eine elektrische Hilfssteuerung den Bedarf der Verstelleinheit aus elektrischen Signalen, die von einer übergeordneten Antriebssteuerung oder aus der Verstelleinheit selbst empfangen werden.

Entsprechend dem ermittelten Bedarf wird der Druck des Speisedruckbegrenzungsventils von der Hilfssteuerung eingestellt, vorzugsweise mittels eines elektrohydraulischen Aktors.

Der Hydrospeicher ist auch in der Lage, kurzzeitige besonders hohe hydraulische Leistungsanforderungen der Verstelleinheit zu bedienen. Um den Druck der Versorgungseinheit nicht nur steuern, sondern auch regeln zu können, wird die Versorgungseinheit vorteilhafterweise um einen elektrohydraulischen Druckaufnehmer ergänzt, dies ermöglicht eine Messung des Drucks und im geschlossenen Regelkreis eine bedarfsgerechte Einstellung des Speisedruckbegrenzungsventils.

Weil die elektrische Hilfssteuerung auch das Speisedruckventil verstellen soll, ist es von Vorteil, dass diese Hilfssteuerung Informationen über die Drücke in den Arbeitsleitungen des Antriebs erhält, damit sie aus den genannten Drücken die Belastung des Antriebs und damit den Speisedruckbedarf des Antriebs ermitteln kann. Der Speisedruckbedarf kann auch abhängig von der Drehzahl des hydrostatischen Motors beschrieben werden, in diesem Fall erlauben die Signale aus der Antriebssteuerung eine Abschätzung und Berücksichtigung der Drehzahl.

Der Speisedruck beeinflusst auch die Wärmebilanz des Antriebs, daher ist es vorteilhaft, die Temperatur im Antrieb an geeigneten Stellen zu messen, die Messergebnisse an die elektrische Hilfssteuerung zu leiten und abhängig von der gemessenen Temperatur den Mindestspeisedruck festzulegen.

Wenn der Speisedruckbedarf und der Leistungsbedarf der Versorgungseinheit niedrig sind, wird der Speisedruck durch die Hilfssteuerung auf einen niedrigeren Wert verstellt und damit wird die Leistungsaufnahme der Speisepumpe reduziert, was insbesondere im Teillastbetrieb den Wirkungsgrad des hydrostatischen Antriebs verbessert.

### Anwendung:

Hydrostatische Antriebe der beschriebenen Art finden beispielsweise in selbstfahrenden Arbeitsmaschinen Anwendung.

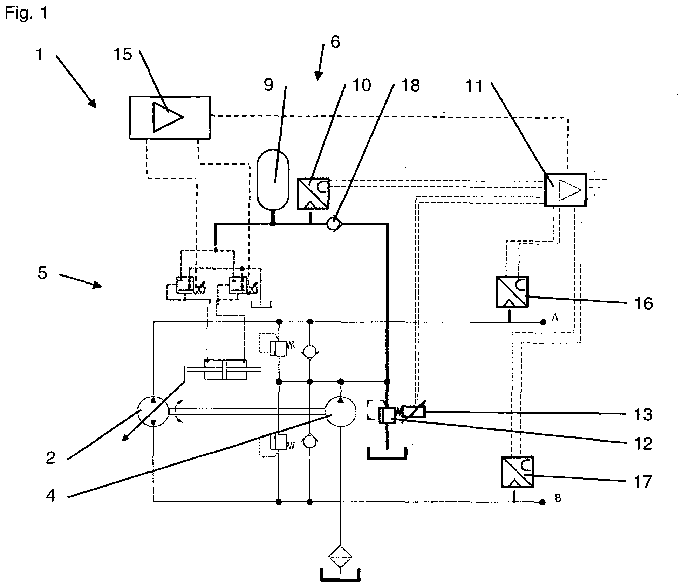

Bilder: Fig. 1 zeigt den Schaltplan des erfindungsgemäßen hydrostatischen Antriebs.

### Beispielhafte Ausführung

Ein hydrostatischer Antrieb (1) gemäß Fig. 1 besteht mindestens aus einer Verstellpumpe (2), einem nicht dargestellten Hydraulikmotor, einer Speisepumpe (4), einem Speisedruckbegrenzungsventil (12), einer Verstelleinheit (5) und einer die Verstelleinheit ansteuernden Antriebssteuerung (15).

Die Verstelleinheit (5) wird durch eine elektrohydraulische Versorgungseinheit (6) mit hydraulischer Energie versorgt, wobei die Versorgungseinheit (6) aus einem Hydrospeicher (9) und einem Rückschlagventil (18) besteht und mit dem Speisedruckbegrenzungsventil (12) verbunden ist, das als elektisch verstellbares Druckbegrenzungsventil ausgeführt ist.

Dabei ist der Hydrospeicher (9) auch mit einem elektrohydraulischen Drucksensor (10) verbunden, der sein elektrisches Signal an eine elektrische Hilfssteuerung (11) abgibt, wobei die elektrische Hilfssteuerung (11) das Speisedruckbegrenzungsventil (12) ansteuert.

Das Speisedruckbegrenzungsventil (12) wird vorzugsweise durch einen elektromagnetischen Aktuator (13) verstellt, wobei der elektromagnetische Aktuator elektrisch mit der Hilfssteuerung (11) verbunden ist.

Weiter vorzugsweise ist das Speisedruckbegrenzungsventil (12) als proportionalwirkendes elektrohydraulisches Ventil ausgeführt, wobei die Hilfssteuerung (11) ein proportionales elektrisches Signal an den an den elektrischen Aktuator (13) abgibt.

Weiter vorzugsweise erhält das elektrohydraulische Speisedruckbegrenzungsventil (12) von der elektrischen Hilfssteuerung (11) einen proportionalen elektrischen Strom als Eingangssignal, wobei der elektrische Aktuator (13) so eingerichtet ist, dass mit ansteigendem elektrischen Strom der Sollwert des Speisedrucks vermindert wird und mit fallendem elektrischen Strom der Sollwert des Speisedrucks erhöht wird.

Vorteilhafterweise sind die Auslässe für die Arbeitsdrücke der Verstellpumpe (2) mit Arbeitsdrucksensoren (16, 17) verbunden, wobei die Signale der Arbeitsdrucksensoren zu der Hilfssteuerung (11) oder der Antriebssteuerung (15) geleitet werden.

Ebenfalls vorteilhafterweise ist die Versorgungseinheit (6) auch mit weiteren elektrohydraulischen oder hydromechanischen Geräten verbunden ist, um diese mit hydraulischer Energie zu versorgen, vorzugsweise sind diese Geräte elektrohydraulische Ventile, die andere Ventile vorsteuern oder die Kupplungen oder Zylinder ansteuern.

In einer Weiterentwicklung der Erfindung sind an geeigneten Stellen des hydrostatischen Antriebs Temperatursensoren angebracht, deren Signale an die Hilfssteuerung geleitet werden. Geeignete Stellen können die Arbeitsleitungen, das Pumpengehäuse oder die Leitung von dem Speisedruckbegrenzungsventil zum Tank sein.

Zum Betrieb des hydrostatischen Antriebs ist die elektrische Hilfssteuerung (11) als programmgesteuerte Steuerung ausgeführt und sie steuert das Speisedruckbegrenzungsventil (12) so an, dass die Versorgungseinheit (6) die Verstelleinheit (5) bedarfsgerecht mit hydraulischer Energie versorgt, wobei der Bedarf in Abhängigkeit von elektrischen Signalen aus der Verstelleinheit (5), aus einer der Hilfssteuerung (11) übergeordneten Antriebssteuerung (15) oder aus Signalen der Arbeitsdrucksensoren (16, 17) ermittelt wird.

Dabei steuert die Hilfssteuerung (11) vorzugsweise das Speisedruckbegrenzungsventil (12) elektrisch so an, dass unter Beachtung des Speisedruckbedarfs der Verstellpumpe (2) bei einem schwankenden Leistungsbedarf der Verstelleinheit (5) der Speisedruck und damit auch der Druck der Versorgungseinheit (6) angehoben oder abgesenkt wird, wobei der Leistungsbedarf der Verstelleinheit (5) aus Signalen der Verstelleinheit und aus dem Signal des Drucksensors (10) in der Hilfssteuerung (11) ermittelt wird und wobei der Speisedruckbedarf der Verstellpumpe (2) aus den Signalen der Arbeitsdrucksensoren (16, 17) ermittelt wird.

Wenn kein erhöhter Leistungsbedarf der Verstelleinheit vorliegt, wird der Speisedruck so weit wie zulässig abgesenkt, unter Berücksichtigung der aus den Signalen der Arbeitsdrucksensoren und aus anderen verfügbaren Signalen ermittelten Betriebssituation des hydrostatischen Getriebes. Durch diese Absenkung des Speisedrucks wird eine erhebliche Minderung der Verlustleistung erreicht.

### Liste der Bezuaszeichen

1. Hydrostatischer Antrieb
2. Verstellpumpe
4. Speisepumpe
5. Verstelleinheit
6. Versorgungseinheit
9. Hydrospeicher
10. Drucksensor
11. Elektrische Hilfssteuerung
12. Speisedruckbegrenzungsventil
13.Aktuator
15. Antriebssteuerung
16. Arbeitsdrucksensor
17. Arbeitsdrucksensor
18. Rückschlagventil

## Patentansprüche

1. Hydrostatischer Antrieb (1), mindestens bestehend aus einer Verstellpumpe (2), einem Hydraulikmotor, einer Speisepumpe (4), einem Speisedruckbegrenzungsventil (12), einer Verstelleinheit (5) und einer die Verstelleinheit ansteuernden Antriebssteuerung (15), wobei die Verstelleinheit (5) durch eine elektrohydraulische Versorgungseinheit (6) mit hydraulischer Energie versorgt wird
**dadurch gekennzeichnet, dass** die Versorgungseinheit (6) mindestend aus einem Hydrospeicher (9) und einem Rückschlagventil (18) besteht und mit dem Speisedruckbegrenzungsventil (12) verbunden ist, das als elektisch verstellbares Druckbegrenzungsventil ausgeführt ist, wobei der Hydrospeicher (9) auch mit einem elektrohydraulischen Drucksensor (10) verbunden ist, der sein elektrisches Signal an eine elektrische Hilfssteuerung (11) abgibt und wobei die elektrische Hilfssteuerung (11) das Speisedruckbegrenzungsventil (12) ansteuert.

2. Hydrostatischer Antrieb nach Anspruch 1, **dadurch gekennzeichnet, dass** das Speisedruckbegrenzungsventil (12) durch einen elektromagnetischen Aktuator (13) verstellt wird, wobei der elektromagnetische Aktuator elektrisch mit der Hilfssteuerung (11) verbunden ist.

3. Hydrostatischer Antrieb nach Anspruch 2, **dadurch gekennzeichnet, dass** das Speisedruckbegrenzungsventil (12) als proportionalwirkendes elektrohydraulisches Ventil ausgeführt ist, wobei die Hilfssteuerung (11) ein proportionales elektrisches Signal an den elektrischen Aktuator (13) abgibt.

4. Hydrostatischer Antrieb nach Anspruch 3, **dadurch gekennzeichnet, dass** das elektrohydraulische Speisedruckbegrenzungsventil (12) von der elektrischen Hilfssteuerung (11) einen proportionalen elektrischen Strom als Eingangssignal erhält, wobei der elektrische Aktuator (13) so eingerichtet ist, dass mit ansteigendem elektrischen Strom der Sollwert des Speisedrucks vermindert wird und mit fallendem elektrischen Strom der Sollwert des Speisedrucks erhöht wird.

5. Hydrostatischer Antrieb nach einem der Ansprüche 1 bis 4, **dadurch gekennzeichnet, dass** die Auslässe für die Arbeitsdrücke der Verstellpumpe (2) mit Arbeitsdrucksensoren (16, 17) verbunden sind, wobei die Signale der Arbeitsdrucksensoren zu der Hilfssteuerung (11) und/oder der Antriebssteuerung (15) geleitet werden.

6. Hydrostatischer Antrieb nach einem der Ansprüche 1 bis 5, **dadurch gekennzeichnet, dass** die Versorgungseinheit (6) auch mit weiteren elektrohydraulischen oder hydromechanischen Geräten verbunden ist, um diese mit hydraulischer Energie zu versorgen.

7. Hydrostatischer Antrieb nach Anspruch 6, **dadurch gekennzeichnet, dass** der Auslass der Hilfspumpe (8) mit elektrohydraulischen Ventilen verbunden ist, die andere Ventile vorsteuern oder die Kupplungen oder Zylinder ansteuern.

8. Verfahren zum Betrieb eines hydrostatischen Antriebs, mindestens bestehend aus einer Verstellpumpe (2), einem Hydraulikmotor, einer Speisepumpe (4), einem Speisedruckbegrenzungsventil (12), einer Verstelleinheit (5) und einer die Verstelleinheit ansteuernden Antriebssteuerung (15),
**dadurch gekennzeichnet, dass**
eine elektrische Hilfssteuerung (11) als programmgesteuerte Steuerung ausgeführt ist und das Speisedruckbegrenzungsventil (12) so ansteuert, dass eine Versorgungseinheit (6) die Verstelleinheit (5) bedarfsgerecht mit hydraulischer Energie versorgt, wobei der Bedarf in Abhängigkeit von elektrischen Signalen aus der Verstelleinheit (5), aus einer der Hilfssteuerung (11) übergeordneten Antriebssteuerung (15) oder aus Signalen der Arbeitsdrucksensoren (16, 17) ermittelt wird.

9. Verfahren zum Betrieb eines hydrostatischen Antriebs nach Anspruch 8, **dadurch gekennzeichnet, dass** die Hilfssteuerung (11) das Speisedruckbegrenzungsventil (12) elektrisch so ansteuert, dass unter Beachtung des Speisedruckbedarfs der Verstellpumpe (2) bei einem schwankenden Leistungsbedarf der Verstelleinheit (5) der Speisedruck und damit auch der Druck der Versorgungseinheit (6) angehoben oder abgesenkt wird, wobei der Leistungsbedarf der Verstelleinheit (5) aus Signalen der Verstelleinheit und aus dem Signal des Drucksensors (10) in der Hilfssteuerung (11) ermittelt wird und wobei der Speisedruckbedarf der Verstellpumpe (2) aus den Signalen der Arbeitsdrucksensoren (16, 17) ermittelt wird.

## Claims

1. Hydrostatic drive (1), consisting at least of a variable displacement pump (2), a hydraulic motor, a feed pump (4), a feed pressure limiting valve (12), an adjusting unit (5), and a drive controller (15) which actuates the adjusting unit, the adjusting unit (5) being supplied with hydraulic energy by way of an electrohydraulic supply unit (6), **characterized in that** the supply unit (6) consists at least of a hydraulic accumulator (9) and a check valve (18) and is connected to the feed pressure limiting valve (12) which is configured as an electrically adjustable pressure limiting valve, the hydraulic accumulator (9) also being connected to an electrohydraulic pressure sensor (10) which outputs its electric signal to an electric auxiliary controller (11) and the electric auxiliary controller (11) actuating the feed pressure limiting valve (12).

2. Hydrostatic drive according to Claim 1, **characterized in that** the feed pressure limiting valve (12) is adjusted by an electromagnetic actuator (13), the electromagnetic actuator being connected electrically to the auxiliary controller (11).

3. Hydrostatic drive according to Claim 2, **characterized in that** the feed pressure limiting valve (12) is configured as a proportionally acting electrohydraulic valve, the auxiliary controller (11) outputting a proportional electric signal to the electric actuator (13).

4. Hydrostatic drive according to Claim 3, **characterized in that** the electrohydraulic feed pressure limiting valve (12) of the electric auxiliary controller (11) receives a proportional electric current as input signal, the electric actuator (13) being set up in such a way that the setpoint value of the feed pressure is decreased as the electric current rises, and the setpoint value of the feed pressure is increased as the electric current falls.

5. Hydrostatic drive according to one of Claims 1 to 4, **characterized in that** the outlets for the working pressures of the variable displacement pump (2) are connected to working pressure sensors (16, 17), the signals of the working pressure sensors being fed to the auxiliary controller (11) and/or the drive controller (15).

6. Hydrostatic drive according to one of Claims 1 to 5, **characterized in that** the supply unit (6) is also connected to further electrohydraulic or hydromechanical devices in order to supply said devices with hydraulic energy.

7. Hydrostatic drive according to Claim 6, **characterized in that** the outlet of the auxiliary pump (8) is connected to electrohydraulic valves which pre-control other valves or actuate the couplings or cylinders.

8. Method for operating a hydrostatic drive, at least consisting of a variable displacement pump (2), a hydraulic motor, a feed pump (4), a feed pressure limiting valve (12), an adjusting unit (5) and a drive controller (15) which actuates the adjusting unit, **characterized in that** an electric auxiliary controller (11) is configured as a program-controlled controller and actuates the feed pressure limiting valve (12) in such a way that a supply unit (6) supplies the adjusting unit (5) with hydraulic energy as required, the requirement being determined depending on electric signals from the adjusting unit (5), from a drive controller (15) which is superordinate to the auxiliary controller (11), or from signals of the working pressure sensors (16, 17).

9. Method for operating a hydrostatic drive according to Claim 8, **characterized in that** the auxiliary controller (11) actuates the feed pressure limiting valve (12) electrically in such a way that, with consideration of the feed pressure requirement of the variable displacement pump (2), the feed pressure and therefore also the pressure of the supply unit (6) are raised or lowered in the case of a fluctuating performance requirement of the adjusting unit (5), the performance requirement of the adjusting unit (5) being determined from signals of the adjusting unit and from the signal of the pressure sensor (10) in the auxiliary controller (11), and the feed pressure requirement of the variable displacement pump (2) being determined from the signals of the working pressure sensors (16, 17).

## Revendications

1. Entraînement hydrostatique (1), consistant en au moins une pompe variable (2), un moteur hydraulique, une pompe de gavage (4), une vanne de limitation de pression de gavage (12), une unité de réglage (5) et une commande d'entraînement (15) pilotant l'unité de réglage, dans lequel l'unité de réglage (5) est alimentée en énergie hydraulique par une unité d'alimentation électrohydraulique (6),**caractérisé en ce que** l'unité d'alimentation (6) consiste au moins en un accumulateur hydraulique (9) et un clapet antiretour (18) et est raccordée à la vanne de limitation de pression de gavage (12) qui est réalisée sous forme de vanne de limitation de pression à réglage électrique, l'accumulateur hydraulique (9) étant également raccordé à un capteur de pression électrohydraulique (10) qui fournit son signal électrique à une commande auxiliaire électrique (11), et la commande auxiliaire électrique (11) pilotant la vanne de limitation de pression de gavage (12).

2. Entraînement hydrostatique selon la revendication 1, **caractérisé en ce que** la vanne de limitation de pression de gavage (12) est réglée par un actionneur électromagnétique (13), l'actionneur électromagnétique étant raccordé électriquement à la commande auxiliaire (11).

3. Entraînement hydrostatique selon la revendication 2, **caractérisé en ce que** la vanne de limitation de pression de gavage (12) est réalisée comme vanne électrohydraulique agissant proportionnellement, la commande auxiliaire (11) émettant un signal électrique proportionnel vers l'actionneur électrique (13).

4. Entraînement hydrostatique selon la revendication 3, **caractérisé en ce que** la vanne de limitation de pression de gavage électrohydraulique (12) reçoit depuis la commande auxiliaire électrique (11) un courant électrique proportionnel en tant que signal d'entrée, l'actionneur électrique (13) étant arrangé de telle sorte que la valeur de consigne de la pression de gavage est réduite lorsque le courant électrique augmente et la valeur de consigne de la pression de gavage est accrue lorsque le courant électrique diminue.

5. Entraînement hydrostatique selon l'une des revendications 1 à 4, **caractérisé en ce que** les sorties pour les pressions de travail de la pompe variable (2) sont raccordées à des capteurs de pression de travail (16, 17), les signaux des capteurs de pression de travail étant envoyés à la commande auxiliaire (11) et/ou à la commande d'entraînement (15).

6. Entraînement hydrostatique selon l'une quelconque des revendications 1 à 5,
**caractérisé en ce que** l'unité d'alimentation (6) est également raccordée à des appareils supplémentaires électrohydrauliques ou hydromécaniques afin d'alimenter ceux-ci en énergie hydraulique.

7. Entraînement hydrostatique selon la revendication 6, **caractérisé en ce que** la sortie de la pompe auxiliaire (8) est raccordée à des vannes électrohydrauliques qui précommandent d'autres vannes ou qui pilotent les accouplements ou les cylindres.

8. Procédé de fonctionnement d'un entraînement hydrostatique, consistant en au moins une pompe variable (2), un moteur hydraulique, une pompe de gavage (4), une vanne de limitation de pression de gavage (12), une unité de réglage (5) et une commande d'entraînement (15) pilotant l'unité de réglage,
**caractérisé en ce qu'**une commande auxiliaire électrique (11) est réalisée comme commande programmable et pilote la vanne de limitation de pression de gavage (12) de telle sorte qu'une unité d'alimentation (6) alimente l'unité de réglage (5) en énergie hydraulique selon la demande, la demande étant déterminée selon des signaux électriques à partir de l'unité de réglage (5), à partir d'une commande d'entraînement (15) supérieure à la commande auxiliaire (11) ou à partir de signaux des capteurs de pression de travail (16, 17).

9. Procédé de fonctionnement d'un entraînement hydrostatique selon la revendication 8, **caractérisé en ce que** la commande auxiliaire (11) pilote électriquement la vanne de limitation de pression de gavage (12) de telle sorte que, en respectant la demande en pression de gavage de la pompe variable (2), la pression de gavage et par conséquent la pression de l'unité d'alimentation (6) est augmentée ou diminuée lors d'une demande variable de puissance de l'unité de réglage (5), la demande de puissance de l'unité de réglage (5) étant déterminée à partir de signaux de l'unité de réglage et du signal du capteur de pression (10) de la commande auxiliaire (11) et la demande en pression de gavage de la pompe variable (2) étant déterminée à partir des signaux des capteurs de pression de travail (16, 17).
